# EUROPÄISCHE PATENTSCHRIFT

(11) **EP 1 430 980 B1**
(45) Veröffentlichungstag und Bekanntmachung des Hinweises auf die Patenterteilung: **10.12.2008**
(21) Anmeldenummer: 03025213.4
(22) Anmeldetag: 05.11.2003
(51) Int. Cl.: B23B 51/02, E21B 10/44

(54) **Steinbohrer**
Stone drill
Foret pour pierres

(30) Priorität: 19.12.2002 DE 10260113
(43) Veröffentlichungstag der Anmeldung: 23.06.2004
(73) Patentinhaber: ROBERT BOSCH GMBH, 70442 Stuttgart (DE)
(72) Erfinder: Schwarz, Gerhard, 88273 Frontreute (DE); Lang, Marco, Dr., 88213 Ravensburg (DE)
(74) Vertreter: Otten, Herbert

(56) Entgegenhaltungen:
- DE-A- 2 940 595
- US-A- 3 773 122
- US-B1- 6 431 295

## Beschreibung

Die Erfindung betrifft einen Gesteinsbohrer gemäß dem Oberbegriff des Anspruchs 1.

Derartige Gesteinsbohrer kommen zum Einsatz, um in Beton, Stein, Mauerwerk und ähnlichen Werkstoffen Löcher für Befestigungen oder Durchbrüche zu bohren.

Aus der DE 38 20 695 A1 ist ein Gesteinsbohrer mit einem in Draufsicht dreieckförmigen bzw. V-förmigen Bohrkopf bekannt, welcher mit einer Hauptschneidplatte und einer asymmetrisch zu dieser angeordneten Nebenschneidplatte bestückt ist. Die Nebenschneidplatte ist nur in einem Abschnitt einer Nut angeordnet, welche die Nut für die Hauptschneidplatte durchschneidet, so dass in einem weiteren Abschnitt eine Leernut gebildet ist, in welche keine Schneidplatte eingesetzt ist. Die Nuten für die Haupt- und Nebenschneidplatten werden z.B. mittels einer Schleifscheibe in den Bohrerkopf eingebracht, die eine zur Bohrerlängsachse ausgerichtete Querbewegung durchführt.

Weiterhin ist aus der WO 01/33031 A1 ein Hammerbohrer bekannt, welcher einen zentrisch an der Bohrerspitze angeordneten Einsatz und exzentrisch zur Bohrerlängsachse angeordnete Schneidelemente aufweist, welche am Umfangsbereich des Bohrkopfes befestigt sind. Nachteilig an einem derartigen Hammerbohrer ist, dass die Nuten für die exzentrisch angeordneten Schneidelemente nur durch ein aufwendiges Fertigungsverfahren, beispielsweise Fräsen mit einem Fingerfräser, in den Bohrerkopf eingebracht werden können. Weiterhin wird es als nachteilig angesehen, dass exzentrisch angeordnete Schneidelemente nur einseitig eingebettet sind. Diese asymmetrische Einbettung führt nach dem Einlöten zu ungünstigen Spannungszuständen aufgrund der unterschiedlichen thermischen Ausdehnungskoeffizienten von Stahl und Hartmetall. Weiterhin ist die Fixierung nur einseitig in das Trägermaterial eingebetteter Schneidelemente fertigungstechnisch nachteilig, da diese aufgrund einer fehlenden Anlagefläche beim Löten schwierig in ihrer Position zu halten sind.

Aufgabe der Erfindung ist es, einen Gesteinsbohrer und ein Verfahren zur Herstellung eines solchen Gesteinsbohrers vorzuschlagen, welcher einfacher zu fertigen ist und das Auftreten starker Verzugsspannungen zwischen den Hartmetalleinsätzen und dem Bohrer vermeidet. Weiterhin soll die Bohrleistung der Leistung von Gesteinsbohrern mit durchgehender Hartmetallschneide entsprechen.

Diese Aufgabe wird durch die kennzeichnenden Merkmale des Sachanspruchs 1 sowie des Verfahrensanspruchs 19 gelöst. Durch die in den Unteransprüchen genannten Merkmale sind vorteilhafte Ausführungen und Weiterbildungen der Erfindung möglich.

Der erfindungsgemäße Gesteinsbohrer besitzt einen in Draufsicht V-förmig oder dreieckförmig ausgebildeten Bohrerkopf, wobei die Schneidelemente mit zwei gegenüberliegenden Seiten in Nuten eingelötet sind, welche in Seitenflächen des Bohrerkopfs parallel zur Bohrerlängsachse verlaufen, wobei die radial außen liegende Nut entgegen der Bohrrichtung bogenförmig verflacht oder wobei wenigstens eine Nut entgegen der Bohrrichtung in eine Förderwendelnut ausläuft. Hierdurch ist eine symmetrische Einlötung der Schneidelemente gegeben, durch welche ungünstige Spannungszustände vermieden werden. Weiterhin ist durch die beidseitige Einbettung der Schneidelemente eine optimale Weiterleitung sämtlicher auf die Schneidelemente wirkender Kräfte auf den Bohrerkopf möglich. Fertigungstechnisch lassen sich die Schneidelemente einfach in den Nuten platzieren, da diese durch die Nut in wenigstens eine Richtung bereits optimal geführt sind, so dass eine Halterungsvorrichtung für die Schneidplatten nicht eine Positionierung in alle Raumrichtungen gewährleisten muss. Eine Nut mit bogenförmigem Auslauf lässt sich fertigungstechnisch besonders einfach mit einer Schleifscheibe derart herstellen, indem die Schleifscheibe radial in den Bohrerkopf eindringt und eine seitliche Einschnittbewegung durchführt. Auch Nuten, welche in eine Förderwendelnut auslaufen, lassen sich so fertigungstechnisch einfach herstellen, da die Förderwendelnut als Freiraum zum Einfahren oder Ausfahren für das Bearbeitungswerkzeug nutzbar ist. Der dreieckförmige oder V-förmige Bohrerkopf erlaubt eine optimale Einbettung von drei Schneidelementen, da die Nuten zu den Seitenwänden hin eine große Wandstärke aufweisen, welche geeignet ist, die auf die Schneidelemente einwirkenden Kräfte zu übernehmen.

Eine vorteilhafte Ausbildung des Erfindungsgegenstandes sieht vor, die exzentrischen Schneidelemente symmetrisch an einem Umfang des Bohrerkopfes anzuordnen. Hierdurch ist eine im Durchschnitt relativ gleichmäßige Belastung der Schneidelemente gewährleistet.

Weiterhin sieht eine Ausbildung der Erfindung vor, die exzentrischen Schneidelemente symmetrisch bzgl. der Bohrerlängsachse anzuordnen, das heißt, die Schneidelemente in gleichem Abstand zur Bohrerlängsachse zu positionieren. Diese Anordnung erlaubt eine fertigungstechnisch einfache Herstellung, da der Bohrer lediglich in eine neue Position zum Werkzeug gedreht werden muss.

Gemäß einer Ausführungsvariante sieht die Erfindung vor, wenigstens eine Seitenfläche des in Draufsicht dreieckförmigen Bohrerkopfs bogenförmig auszubilden und so einen Bohrerkopf zu gestalten, welcher in Draufsicht etwa die Kontur eines Kreissegments zeigt. Hierdurch wird eine gute Führung im Bohrloch erzielt und gleichzeitig ein Verschleißschutz erreicht. Weiterhin eignet sich ein derartig gestalteter Bohrerkopf sowohl für die symmetrische als auch die asymmetrische Anordnung der Schneidelemente optimal, da im bogenförmigen Bereich des Kreissegments eine Vielzahl von Möglichkeiten besteht, Nuten mit ausreichend großer Wandstärke einzubringen. Somit eignet sich der in Draufsicht ein Kreissegment zeigende Gesteinsbohrer optimal für die Y-artige, asymmetrische Anordnung der Schneidelemente, welche den Gesteinsbohrer unanfällig für über die Schneidelemente eingeleitete Schwingungen macht.

Eine zweckmäßige Ausgestaltung des Erfindungsgegenstandes sieht vor, den Hartstoffeinsatz als stiftförmigen Einsatz auszubilden, welcher in einer in der Mittellängsachse des Bohrers angeordneten Bohrung oder Ausnehmung angeordnet ist. Hierdurch ist eine fertigungstechnisch einfache und exakte Befestigung des Hartstoffeinsatzes möglich.

Weiterhin sieht die Erfindung vor, den zentrischen Einsatz und die plattenförmigen Schneidelemente, in Längsrichtung des Gesteinsbohrers betrachtet, voneinander beabstandet anzuordnen, so dass begrenzt durch die Seitenflächen des zentrischen Einsatzes und begrenzt durch die Seitenflächen der Schneidelemente in Draufsicht eine etwa kreisringförmige Stirnfläche entsteht. Hierdurch bleibt der Bohrerkopf trotz des zentrischen und der exzentrischen Einsätze massiv und kann auch in einem Bereich, welcher bei der Rotation nicht durch Einsätze überstrichen wird, die gewünschte zerstörende Wirkung entfalten.

Eine besondere Ausführungsform des Erfindungsgegenstandes sieht vor, die Nut mit einer gleichbleibenden Tiefe zu gestalten. Eine derartige Nut ermöglicht das problemlose Einbetten unterschiedlich langer Schneidelemente.

Eine weitere Ausführungsform des Erfindungsgegenstandes sieht vor, die Nut mit einer Tiefe zu gestalten, welche zu der Bohrerspitze hin zunimmt. Hierdurch ist es möglich, das Schneidelement im Bereich der Bohrerspitze besonders tief einzubetten und damit im Bereich seiner größten Belastung robust zu machen.

Erfindungsgemäß ist es auch vorgesehen, den Boden der Nut im Querschnitt wenigstens bereichsweise bogenförmig zu gestalten. Eine derartige geformte Nut entfaltet nur eine minimale Kerbwirkung am Bohrerkopf.

Besonders vorteilhaft ist es, wenn der zentrale Hartstoffeinsatz in seinem Wirkbereich als Pyramide oder Kegel ausgebildet ist, da er dann optimale Schlageigenschaften besitzt.

Weiterhin sieht die Erfindung vor, die plattenförmigen exzentrischen Schneidelemente mit einer Querachse auf die Mittellängsachse des Bohrers auszurichten, um von allen Schneidelementen eine annähernd gleiche Rückwirkung auf den Bohrerkopf zu erhalten.

Alternativ ist es vorgesehen, wenigstens eines der plattenförmigen exzentrischen Schneidelemente zu der Mittellängsachse des Bohrers parallel beabstandet und gekippt anzuordnen. Hierdurch ist es möglich die das Schneidelement treffenden, in Richtung der Bohrerlängsachse verlaufenden Schlagbelastungen besser vom Schneidelement auf den Bohrerkopf zu leiten und durch die asymmetrische Anordnung einen besseren Abtrag zu erhalten.

Erfindungsgemäß ist es vorgesehen, die gegenüberliegenden Seiten des Schneidelements zu wenigstens 50%, vorzugsweise mindestens 80%, zwischen den Seitenwänden der Nut einzubetten. Hierdurch ist eine ausreichende Befestigung des jeweiligen Schneidelements über die Lötverbindung in der Nut gewährleistet.

Die Erfindung sieht vor, den Radius des Hartstoffeinsatzes in einer Größe zu halten, welche etwa 30% des Nennradius des Gesteinsbohrers beträgt. Weiterhin weist der Schlagring eine Dicke auf, welche etwa 15% des Nennradius des Gesteinsbohrers beträgt. Abschließend ist für das exzentrische Schneidelement eine Tiefe vorgesehen, welche etwa 55% des Nennradius des Gesteinsbohrers beträgt. Durch eine derartige Dimensionierung der in die Bohrrichtung wirkenden Bauteile ist ein optimaler Bohrfortschritt bei hoher Standzeit des Gesteinsbohrers gewährleistet.

Die Erfindung sieht auch vor, die Hauptschneide des Schneidelements bzw. das Schneidelement gegenüber der Oberfläche des Schlagrings in der Bohrrichtung zurückversetzt anzuordnen. Hierdurch erhält der Bohrerkopf eine kegelähnlich Spitze, welche das Eindringen in das zu bearbeitende Material erleichtert.

Weiterhin ist es vorteilhaft, die Oberfläche des Schlagrings als Teil einer Kegelmantelfläche auszubilden, da eine solche Fläche besonders zur Übertragung von Schlagkräften geeignet ist.

Das erfindungsgemäße Verfahren zur Herstellung eines Gesteinsbohrers sieht einen in Draufsicht V-förmig oder dreieckförmig ausgebildeten Bohrerkopf vor, an dessen abgeflachten oder abgerundeten Seitenflächen etwa parallel zu seiner Längsrichtung die Nuten mittels einer in Längsrichtung des Gesteinsbohrers verfahrbaren Schleifscheibe eingebracht werden. Hierdurch ist es möglich die Nuten für die Einbettung der Schneidelemente fertigungstechnisch einfach in den Bohrerkopf einzubringen und die aufwendige Fertigung des Bohrerkopfes mit einem Fingerfräser zu vermeiden.

Weiterhin sieht das Verfahren zur Herstellung eines Gesteinsbohrers vor, für die Herstellung wenigstens einer Nut den Bohrerkopf bzw. den Steg einer der Förderwendeln mit der Schleifscheibe zu durchtrennen, so dass die für die Anordnung des Schneidelements vorgesehene Nut in die Förderwendelnut mündet. Dies erlaubt auch die Anwendung von Schleifscheiben mit relativ großem Durchmesser, da mit der Förderwendelnut unterhalb des Bohrerkopfes ein Freiraum zum Ein- oder Ausfahren der Schleifscheibe zur Verfügung steht. Insbesondere ist es vorgesehen bei einem Gesteinsbohrer mit einer eingängigen Förderwendel eine der drei Nuten in die Abfuhrnut der Förderwendel münden zu lassen, bei einer zweigängigen Förderwendel zwei der drei Nuten in die Abfuhrnuten münden zu lassen und bei einer dreigängigen Förderwendel alle drei Nuten in die Abfuhrnuten der Förderwendel münden zu lassen. Hierbei münden die Nuten vorzugsweise jeweils in unterschiedliche Gänge der Förderwendel, so dass jeder Gang nur mit einer Nut in Verbindung steht.

Weitere Einzelheiten der Erfindung werden in der Zeichnung anhand von schematisch dargestellten Ausführungsbeispielen gezeigt.

Hierbei zeigt:
- Figur 1a:: eine teilweise geschnittene Seitenansicht der oberen Hälfte eines Gesteinsbohrers,
- Figur 1b:: eine Draufsicht auf den in Figur 1a gezeigten Gesteinsbohrer,
- Figur 2a:: eine teilweise geschnittene Seitenansicht der oberen Hälfte eines zweiten Gesteinsbohrers,
- Figur 2b:: eine Draufsicht auf den in Figur 2a gezeigten Gesteinsbohrer,
- Figur 3a:: eine teilweise geschnittene Seitenansicht der oberen Hälfte eines dritten Gesteinsbohrers,
- Figur 3b:: eine Draufsicht auf den in Figur 3a gezeigten Gesteinsbohrer,
- Figur 4a:: eine teilweise geschnittene Seitenansicht der oberen Hälfte eines vierten Gesteinsbohrers,
- Figur 4b:: eine Draufsicht auf den in Figur 4a gezeigten Gesteinsbohrer,
- Figur 5a:: eine teilweise geschnittene Seitenansicht der oberen Hälfte eines fünften Gesteinsbohrers,
- Figur 5b:: eine Draufsicht auf den in Figur 5a gezeigten Gesteinsbohrer,
- Figur 6:: eine perspektivische Ansicht eines sechsten Gesteinsbohrers,
- Figur 7:: eine schematische Darstellung eines aus dem Stand der Technik bekannten Herstellungsverfahrens für eine Nut und
- Figur 8:: eine schematische Darstellung des erfindungsgemäßen Herstellungsverfahrens für eine seitlich am Gesteinsbohrer angeordnete Nut.

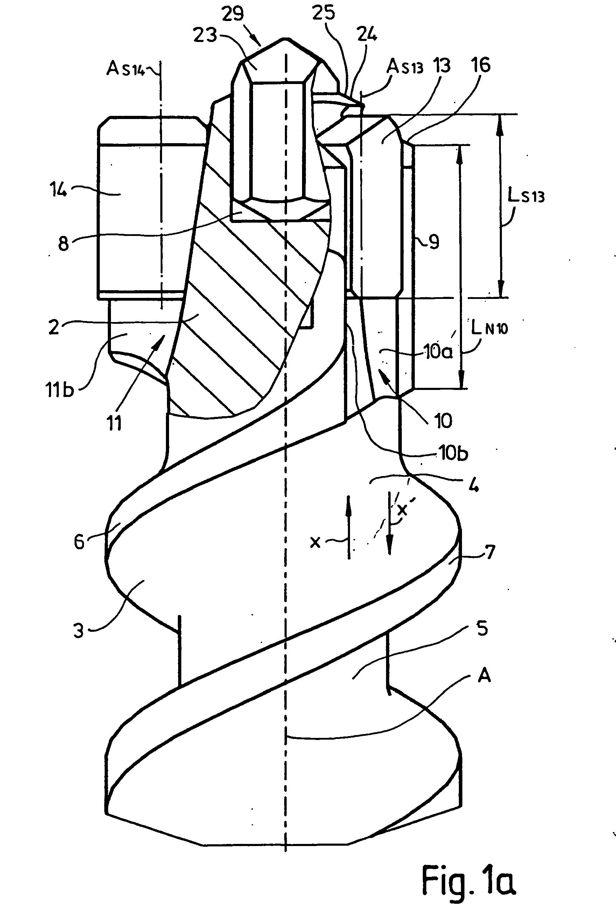

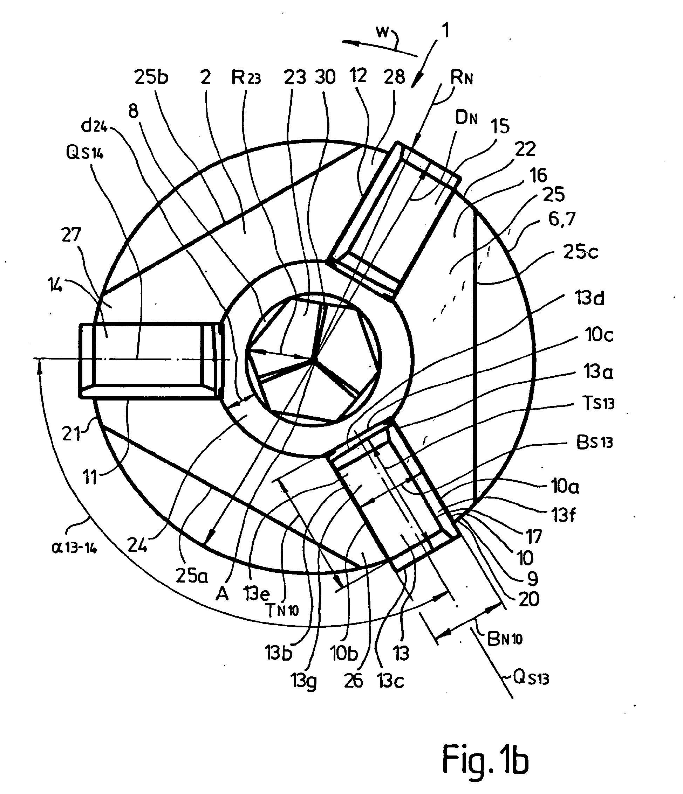

In Figur 1a ist ein Abschnitt eines ersten Gesteinsbohrers 1 in teilweise geschnittner Seitenansicht dargestellt. Der Gesteinsbohrer 1 weist einen Bohrerkopf 2, eine Förderwendel 3 und einen nicht dargestellten Einspannschaft auf, welcher als sogenannter SDS-Plus- oder SDS-Max-Einspannschaft ausgebildet sein kann. Bei der Förderwendel 3 handelt es sich um eine zweigängige Förderwendel, deren Förderwendelnuten 4, 5 bzw. Abfuhrnuten durch zwei Förderwendelstege 6, 7 voneinander getrennt sind. Entlang einer Bohrerlängsachse A geht die Förderwendel 3 in einer Bohrrichtung x in den Bohrerkopf 2 über. Der Bohrerkopf 2 weist eine sich in eine Pfeilrichtung x öffnende Bohrung 8 auf, welche zentrisch zur Bohrerlängsachse A angeordnet ist. Weiterhin sind an einem Umfang 9 des Bohrerkopfs 2 Nuten 10, 11, 12 (siehe auch Figur 1b, hier sind die Nut 10 und das Schneidelement 15 exemplarisch beschrieben) angeordnet, welche beabstandet und parallel zu der Bohrerlängsachse A verlaufen. Die Nuten 10, 12 münden in Pfeilrichtung x' in die Förderwendelnuten 4, 5. Die Nuten 10 - 12 weisen jeweils Seitenwände 10a, 10b bzw. 11a, 11b bzw. 12a, 12b und Böden 10c, 11c, 12c auf. Die Nuten sind definiert durch Tiefen T_{N10} Breiten B_{N10} und Längen L_{N10}. Zwischen den Seitenwänden 10a, 10b bzw. 11a, 11b bzw. 12a, 12b der Nuten 10 - 12 sind jeweils Schneidelemente 13, 14, 15 eingelötet. Diese sind definiert durch Längen L_{S13}, Breiten B_{S13} und Tiefen T_{S13}. Die Schneidelemente 13 - 15 weisen jeweils eine parallel zur Bohrerlängsachse A verlaufende Längsachse A_{S13}, A_{S14} und eine senkrecht auf der Bohrerlängsachse A stehende Querachse Q_{S13}, Q_{S14} auf. Weiterhin stehen die Schneidelemente 13 - 15 in radialer Richtung über den Umfang 9 des Bohrerkopfs 2 bzw. über die Förderwendelstege 6, 7 über und definieren so einen Nenndurchmesser D_{N} bzw. einen Nennradius R_{N} des Gesteinsbohrers 1. Die Schneidelemente 13 - 15 sind gleichmäßig und symmetrisch zur Bohrerlängsachse A am Umfang 9 des Bohrerkopfes 2 angeordnet. Die Querachsen Q_{S13}, Q_{S14} der Schneidelemente 13 - 15 schließen miteinander jeweils Winkel α₁₃₋₁₄ = 120° ein. Die Schneidelemente 13 - 15 weisen jeweils zwei Seitenwände 13a, 13b auf, welche parallel zu den Querachsen Q_{S13}, Q_{S14} und den Längsachsen A_{S13}, A_{S14} verlaufen. Weiterhin weisen die Schneidelemente jeweils zwei etwa parallel zu den Böden 10c der Nuten 10 - 12 verlaufende Seitenwände 13c, 13d auf. In Wirkrichtung x des Gesteinsbohrers 1 besitzen die Schneidelemente 13 - 15 jeweils eine Oberseite 13e, welche durch Schneiden 17 in eine Spanfläche 13f und eine Freifläche 13g unterteilt ist. Mit den Kopfseiten 13e stehen die Schneidelemente 13 - 15 in der Pfeilrichtung x über eine äußere, ringähnliche Stirnfläche 16 des Bohrerkopfes 2 über. Die Schneidelemente 13 - 15 sind an ihren Seitenwänden 13a, 13b mit den Seitenwänden 10a, 10b bzw. 11a, 11b bzw. 12a, 12b der Nuten 10 - 12 verlötet. Zwischen den Schneidelementen 13 - 15 und einem Hartstoffeinsatz 23, welcher in die Bohrung 8 des Bohrerkopfes 2 eingelötet ist, weist der Bohrerkopf 2 in der Bohrrichtung x eine kreisringförmige Schlagfläche 24 auf. Der Hartstoffeinsatz 23 besitzt in Draufsicht einen Radius R₂₃ und die Schlagfläche eine Dicke d₂₄. Gegenüber der Schlagfläche 24 sind die Schneiden 17 - 19 bzw. die Oberseiten 13e der Schneidelemente 13 - 15 und die äußere Stirnfläche 16 des Bohrerkopfes 2 zurückversetzt. Die kreisringförmige Schlagfläche 24 steigt zu dem pyramidenförmigen Hartstoffeinsatz 23 kegelmantelförmig an. Die äußere Stirnfläche 16, welche zusammen mit der kreisringförmigen Schlagfläche 24 eine Stirnseite 25 des Bohrerkopfes 2 bildet, ist dreieckartig ausgebildet. Die Ecken 26, 27, 28 der äußeren Stirnfläche 16 sind zu Seitenflächen 20 - 22 hin mit den Schneidelementen 13 - 15 bestückt bzw. durch die Nuten 10 - 12 charakterisiert. Der Umfang 9 des Bohrerkopfes 2 ist weiterhin durch jeweils zwischen den Seitenflächen 20 - 22 liegende, ebene Flächen 25a, 25b, 25c begrenzt, welche etwa parallel zur Bohrerlängsachse A verlaufen. Der Hartstoffeinsatz 23 weist eine Spitze 29 auf, welche pyramidenähnlich mit flächigen Schlagkanten 30 ausgebildet ist. Im Bohrbetrieb dreht sich der Gesteinsbohrer 1 in eine Drehrichtung w.

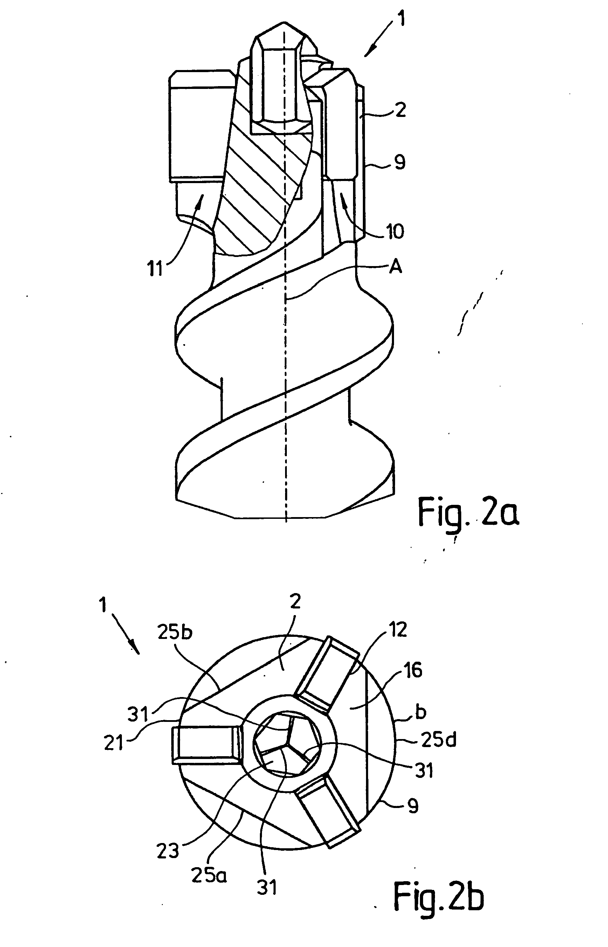

In Figur 2a ist ein Abschnitt eines zweiten Gesteinsbohrers 1 in teilweise geschnittner Seitenansicht dargestellt. In Figur 2b ist dieser Gesteinsbohrer 1 in Draufsicht zu sehen. Im Unterschied zu dem in den Figuren 1a und 1b gezeigten Gesteinsbohrer ist der zweite Gesteinsbohrer 1 mit einem Bohrerkopf 2 ausgestattet, bei welchem eine äußere Stirnfläche 16 in Draufsicht (siehe Figur 2b) als Dreieck mit einer durch einen Kreisbogen b gebildeten Seite ausgebildet ist. An einem Umfang 9 ist der Bohrerkopf 2 durch zwei ebene Flächen 25a, 25b, eine zwischen diesen liegende Fläche 21, in welcher eine Nut 11 verläuft, und eine gewölbte Fläche 25d gebildet. Die Fläche 25d des Bohrerkopfs 2, in welcher Nuten 10, 12 angeordnet sind, ist um eine Längsachse A des Gesteinsbohrers 1 gewölbt. Weiterhin weist ein Hartstoffeinsatz 23 spitze Schlagkanten 31 auf.

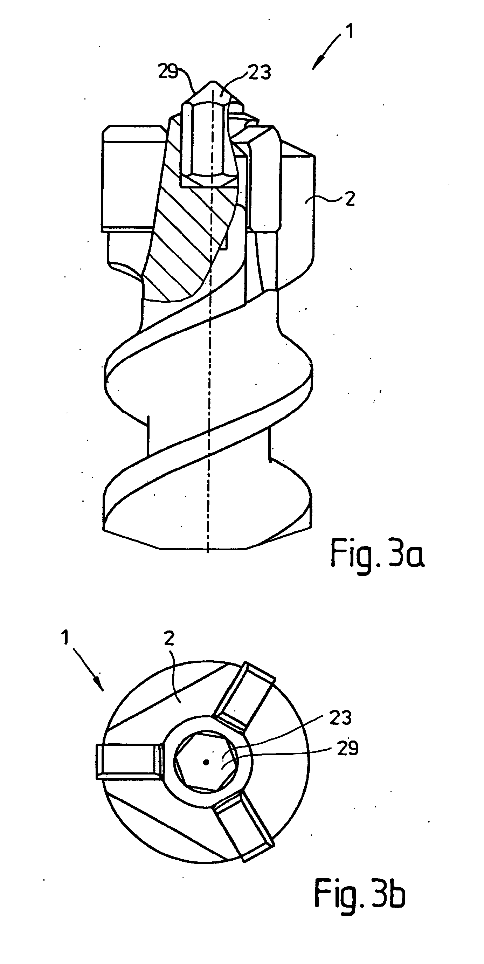

In Figur 3a ist ein Abschnitt eines dritten Gesteinsbohrers 1 in teilweise geschnittner Seitenansicht dargestellt. In Figur 3b ist dieser Gesteinsbohrer 1 in Draufsicht zu sehen. Im Unterschied zu dem in den Figuren 2a und 2b gezeigten Gesteinsbohrer ist der dritte Gesteinsbohrer 1 mit einem Bohrerkopf 2 ausgestattet, welcher einen Hartstoffeinsatz 23 aufweist, der eine kegelförmige Spitze 29 aufweist.

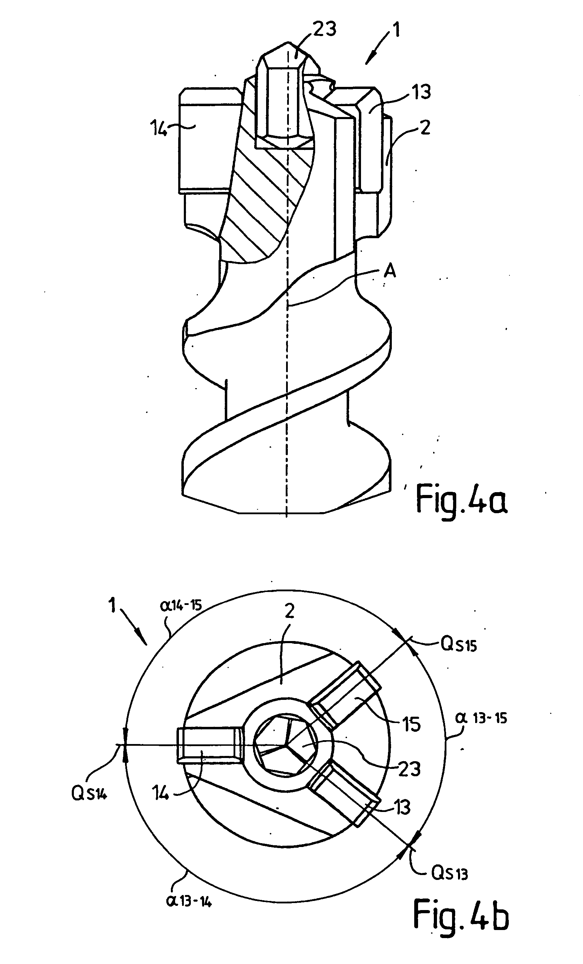

In Figur 4a ist ein Abschnitt eines vierten Gesteinsbohrers 1 in teilweise geschnittner Seitenansicht dargestellt. In Figur 4b ist dieser Gesteinsbohrer 1 in Draufsicht zu sehen. Im Unterschied zu dem in den Figuren 2a und 2b gezeigten Gesteinsbohrer ist der vierte Gesteinsbohrer 1 mit einem Bohrerkopf 2 ausgestattet, bei welchem Schneidelemente 13 - 15 Y-artig angeordnet sind. Querachsen Q_{S13}, Q_{S14}, Q_{S15} der Schneidelemente 13 - 15 weisen zueinander Winkel α₁₃₋₁₄ = 140°, α₁₄₋₁₅ = 140° und α₁₅₋₁₃ = 80° auf. Ein zentrischer Hartstoffeinsatz 23 ist analog zu dem in den Figuren 1a und 1b gezeigten Hartstoffeinsatz ausgebildet.

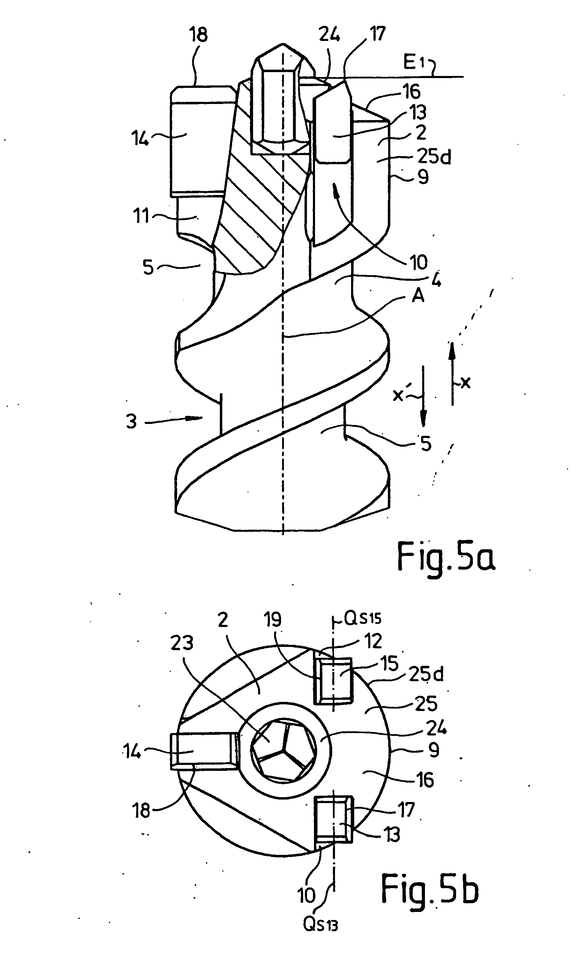

In Figur 5a ist ein Abschnitt eines fünften Gesteinsbohrers 1 in teilweise geschnittner Seitenansicht dargestellt. In Figur 5b ist dieser Gesteinsbohrer 1 in Draufsicht zu sehen. Im Unterschied zu dem in den Figuren 2a und 2b gezeigten Gesteinsbohrer ist der fünfte Gesteinsbohrer 1 mit einem Bohrerkopf 2 ausgestattet, der unterschiedliche Schneidelemente 13 - 15 aufweist. Das Schneidelement 14 ist analog zu dem in den Figuren 2a und 2b gezeigten Schneidelement 14 ausgebildet und angeordnet. Bei den Schneidelementen 13 und 15 handelt es sich um zwei Schneidelemente, welche in Nuten 10, 12 angeordnet sind, die nicht radial zu einer Bohrerlängsachse A ausgerichtet sind, sondern die Schneidelemente 13, 15 so aufnehmen, dass diese mit Querachsen Q_{S13} und Q_{S15} etwa tangential zu einer inneren Schlagfläche 24 einer Stirnseite 25 des Bohrerkopfes 2 verlaufen. Somit weisen auch Schneiden 17, 19 der Schneidelemente 13, 15 ebenfalls eine tangentiale Ausrichtung zu der inneren Schlagfläche 24 auf. Anders ausgedrückt steht - in Draufsicht betrachtet - eine Schneide 18 des Schneidelements 14 etwa senkrecht zu den Schneiden 17, 19 der Schneidelemente 13, 15. Weiterhin sind die Schneidelemente 13 - 15 in Nuten 10 - 12 soweit in eine Richtung x verschoben, dass die Schneiden 17 - 19 annähernd in einer gemeinsamen Ebene E₁ mit der inneren Stirnfläche 24 des Bohrerkopfes 2 liegen. Die Nut 10 mündet nicht wie beispielsweise eine Nut 11 in eine der Förderwendelnuten 5 einer Förderwendel 3, sondern läuft in Pfeilrichtung x' an einem Umfang 9 des Bohrerkopfes 2 in eine gewölbte Seitenfläche 25d bogenförmig aus. Eine äußere Stirnfläche 16 ist gegenüber der Ebene E₁ in eine Pfeilrichtung x' zurückversetzt. Ein zentrischer Hartstoffeinsatz 23 ist analog zu dem in den Figuren 1a und 1b gezeigten Hartstoffeinsatz ausgebildet.

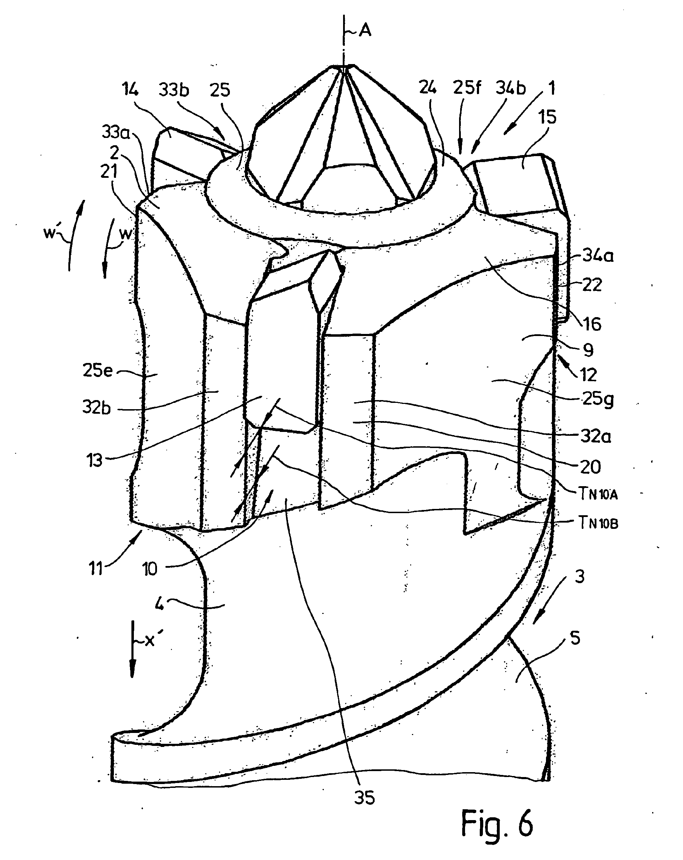

Figur 6 zeigt eine perspektivische Ansicht eines sechsten Gesteinsbohrers 1. Dieser weist einen Bohrerkopf 2 auf, welcher zu einer Stirnseite 25 hin eine innere Stirnfläche 24 und eine äußere Stirnfläche 16 aufweist. Zu einem Umfang 9 hin ist der Bohrerkopf 2 im wesentlichen durch Seitenflächen 20 - 22, welche abgeflachte Ecken des in Draufsicht dreieckförmigen Bohrerkopfes bilden, und jeweils zwischen diesen liegende Seitenflächen 25e, 25f, 25g gebildet. Hierbei verlaufen die Nuten 10 - 12 in den Seitenflächen 20 - 22 und die Flächen 25e, 25f, 25g sind zu einer Bohrerlängsachse A hin durchgebogen. Die gewölbten Seitenflächen 25e - 25g gehen jeweils in die Seitenflächen 20 - 22 über, welche jeweils durch zwei Schultern 32a, 32b bzw. 33a, 33b bzw. 34a, 34b gebildet sind. Zwischen benachbarten Schultern liegen jeweils die Nuten 10 - 12, in welche Schneidelemente 13 -15 eingelötet sind. Die Nuten 10 - 12 verlaufen etwa parallel zu der Bohrerlängsachse A. Die Schneidelemente 13 - 15 erfahren in eine Drehrichtung w und einen Gegendrehrichtung w' durch die beidseitige Einbettung zwischen den Schultern 32a, 32b bzw. 33a, 33b bzw. 34a, 34b jeweils die gleiche Abstützung bzw. den gleichen Schutz.

Unter einer beidseitigen Einbettung der Schneidelemente 13 - 15 ist im Sinne der Erfindung eine Einbettung des Schneidelements zu verstehen, welche eine flächige Abstützung des Schneidelements 13 - 15 durch Schultern 32a, 32b bzw. 33a, 33b bzw. 34a, 34b in Drehrichtung w und in Gegendrehrichtung w' an wenigstens zwei Seiten des Schneidelements 13 - 15 gewährleistet.

Bei den in Figur 6 gezeigten Nuten 10 - 13 handelt es sich um Nuten, welche eine in die Pfeilrichtung x' abnehmende Tiefe aufweisen. Die Tiefe der Nut 10 nimmt in einem Auslaufbereich 35 beispielsweise von einer Tiefe T_{N10A} auf eine Tiefe T_{N10B} ab.

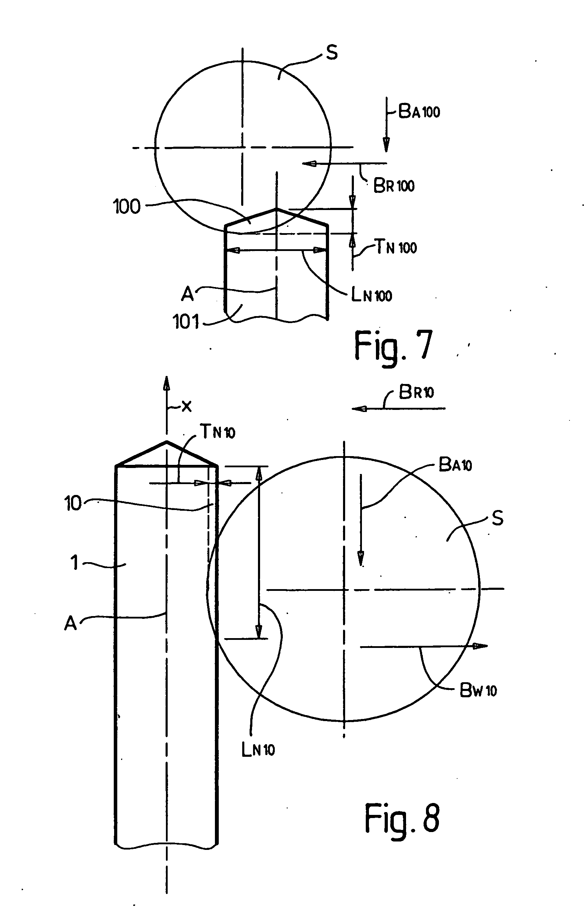

Figur 7 zeigt eine schematische Darstellung eines aus dem Stand der Technik bekannten Herstellungsverfahrens für eine Nut 100. Die maximale Tiefe T_{N100} der Nut 100 wird durch eine axiale bzw. eine in Richtung einer Längsachse A des Bohrers 101 verlaufende Vorschubbewegung B_{A100} einer Schleifscheibe *S* bewirkt. Die Länge L_{N100} der Nut 100 wird durch eine radiale bzw. senkrecht zur Längsachse A des Bohrers 101 verlaufende Bewegung B_{R100} der Schleifscheibe S bestimmt.

Figur 8 zeigt eine schematische Darstellung des Herstellungsverfahrens für eine seitlich an einem Gesteinsbohrer 1 angeordnete Nut 10. Die Tiefe T_{N10} der Nut 10 wird durch eine radiale Zustellbewegung B_{R10} einer Schleifscheibe *S* bewirkt. Die Länge L_{N10} der Nut 10 wird durch eine axiale Vorschubbewegung B_{A10} der Schleifscheibe *S* bewirkt. Die Längsachse A des Gesteinsbohrers 1 wird während des Bearbeitungsvorgangs nie von der Schleifscheibe *S* geschnitten. Die Vorschubbewegung B_{A10} der Schleifscheibe erfolgt also etwa parallel zur Längsachse A des Gesteinsbohrers 1. Mit einer Wegfahrbewegung B_{W10} wird die Schleifscheibe *S* aus dem Gesteinsbohrer heraus gefahren.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1: Gesteinsbohrer
- 2: Bohrerkopf
- 3: Förderwendel
- 4, 5: Förderwendelnut, Abfuhrnut
- 6, 7: Förderwendelsteg
- 8: Bohrung
- 9: Umfang von 2
- 10 - 12: Nut in 2
- 10a, 10b: Seitenwand von 10
- 11a, 11b: Seitenwand von 11
- 11c: Boden von 11
- 12a, 12b: Seitenwand von 12
- 13 - 15: Schneidelement
- 13a - 13d: Seitenwand von 13
- 13e: Oberseite von 13
- 13f: Spanfläche von 13
- 13g: Freifläche von 13
- 16: äußere Stirnfläche von 2
- 17 - 19: Schneide von 13 - 15
- 20 - 22: Seitenfläche an 2
- 23: Hartstoffeinsatz
- 24: kreisringförmige Schlagfläche von 2
- 25: Stirnseite von 2
- 25a - 25c: ebene Fläche an 2
- 25d: gewölbte Seitenfläche an 2
- 25e - 25g: gewölbte Seitenfläche an 2
- 26 - 28: Ecke von 16
- 29: Spitze von 23
- 30: flächige Schlagkante von 23
- 31: spitze Schlagkante von 23
- 32a, 32b: Schulter an 2
- 33a, 33b: Schulter an 2
- 34a, 34b: Schulter an 2
- 35: Auslaufbereich von 10
- 100: Nut
- 101: Bohrer

- A: Bohrerlängsachse
- b: Kreisbogen
- E₁: Ebene von 24 bzw. 17 - 19
- S: Schleifscheibe
- x: Bohrrichtung
- x': Gegenrichtung zu x
- T_{N10}: Tiefe der Nut 10
- T_{N10A}: erste Tiefe der Nut 10
- T_{N10B}: zweite Tiefe der Nut 10
- B_{N10}: Breite der Nut 10
- L_{N10}: Länge der Nut 10
- Tₛ₁₃: Tiefe des Schneidelements 13
- Bₛ₁₃: Breite des Schneidelements 13
- Lₛ₁₃: Länge des Schneidelements 13
- A_{S13}, A_{S14}: Längsachse von 13, 14
- Q_{S13} - Q_{S15}: Querachse von 13 -15
- α₁₃₋₁₄: Winkel zwischen Q_{S13} und Q_{S14}
- α₁₄₋₁₅: Winkel zwischen Q_{S14} und Q_{S15}
- α₁₅₋₁₃: Winkel zwischen Q_{S15} und Q_{S13}
- D_{N}: Nenndurchmesser von 1
- R_{N}: Nennradius von 1
- R₂₄: Radius von 24
- d₂₄: Dicke von 24
- w: Drehrichtung von 1
- w': Gegendrehrichtung von 1
- T_{N100}: Tiefe der Nut 100
- L_{N100}: Länge der Nut 100
- B_{A10}: axiale Verfahrbewegung von S
- B_{R10}: radiale Verfahrbewegung von S
- B_{W10}: radiale Verfahrbewegung von S
- B_{A100}: axiale Verfahrbewegung von S
- B_{R100}: radiale Verfahrbewegung von S

## Patentansprüche

1. Gesteinsbohrer (1) mit einem Bohrerkopf (2) mit einem in der Bohrerlängsachse (A) angeordneten Hartstoffeinsatz (23) und wenigstens drei exzentrisch zur Längsachse (A) angeordneten plattenförmigen Schneidelementen (13 - 15), welche radial in den Bohrerkopf (2) eingebettet sind, **dadurch gekennzeichnet, dass** der Bohrerkopf (2) in Draufsicht V-förmig oder dreieckförmig ausgebildet ist und das jeweilige Schneidelement (13 - 15) mit zwei gegenüberliegenden Seiten (13a, 13b) etwa parallel zur Bohrerlängsachse (A) in eine radial in den Bohrerkopf (2) eingebrachte, axial verlaufende Nut (10 - 12) eingebettet ist, wobei die Nut (12) über die Länge (L_{S15}) des Schneidelements (15) hinaus in Richtung der Bohrerlängsachse (A) bogenförmig ausläuft oder wenigstens eine Nut (10, 11) in Richtung der Bohrerlängsachse (A bzw. x') in eine Abfuhrnut (4, 5) einer Förderwendel (3) mündet.

2. Gesteinsbohrer nach Anspruch 1, **dadurch gekennzeichnet, dass** die exzentrischen Schneidelemente (13 - 15) symmetrisch über den Umfang (9) angeordnet sind.

3. Gesteinsbohrer nach einem der vorhergehenden Ansprüche, **dadurch gekennzeichnet, dass** die exzentrischen Schneidelemente (13 - 15) symmetrisch bzgl. der Bohrerlängsachse (A) angeordnet sind.

4. Gesteinsbohrer nach einem der vorhergehenden Ansprüche **dadurch gekennzeichnet, dass** wenigstens eine Seitenfläche (25a - 25c) des in Draufsicht dreieckförmigen Bohrerkopfs (2) als gewölbte Seitenfläche (25d; 25e - 25g) ausgebildet ist.

5. Gesteinsbohrer nach einem der vorhergehenden Ansprüche, **dadurch gekennzeichnet, dass** der Hartstoffeinsatz (23) als Stift ausgebildet ist, welcher in einer zentrisch zu der Mittellängsachse (A) des Bohrers (1) angeordneten Bohrung (8) befestigt ist.

6. Gesteinsbohrer nach einem der vorhergehenden Ansprüche, **dadurch gekennzeichnet, dass** zwischen dem zentrischen Einsatz (23) und den plattenförmigen Schneidelementen (13 - 15) an einer Stirnseite (25) des Bohrerkopfes (2) eine in Draufsicht kreisringförmige Schlagfläche (24) ausgebildet ist.

7. Gesteinsbohrer nach einem der vorhergehenden Ansprüche **dadurch gekennzeichnet, dass** die Nut (10 - 12) eine gleichbleibende Tiefe (T_{N10}) aufweist.

8. Gesteinsbohrer nach einem der vorhergehenden Ansprüche, **dadurch gekennzeichnet, dass** die Tiefe (T_{N10A}, T_{N10B}) der Nut (10 - 12) zu einer Bohrerspitze (29) hin zunimmt.

9. Gesteinsbohrer nach einem der vorhergehenden Ansprüche, **dadurch gekennzeichnet, dass** die Nut (10 - 12) einen Boden (10c) aufweist, welcher im Querschnitt einen wenigstens bereichsweise bogenförmigen Verlauf aufweist.

10. Gesteinsbohrer nach einem der vorhergehenden Ansprüche, **dadurch gekennzeichnet, dass** der zentrale Hartstoffeinsatz (23) in seinem Wirkbereich als Pyramide oder Kegel ausgebildet ist.

11. Gesteinsbohrer nach einem der vorhergehenden Ansprüche, **dadurch gekennzeichnet, dass** die plattenförmigen exzentrischen Schneidelemente (13 - 15) mit einer Querachse (Q_{S13} - Q_{S15}) auf die Mittellängsachse (A) des Bohrers (1) ausgerichtet sind.

12. Gesteinsbohrer nach einem der vorhergehenden Ansprüche, **dadurch gekennzeichnet, dass** wenigstens eines der plattenförmigen exzentrischen Schneidelemente (13 - 15) zu der Mittellängsachse (A) des Bohrers (1) parallel beabstandet und gekippt verläuft.

13. Gesteinsbohrer nach einem der vorhergehenden Ansprüche, **dadurch gekennzeichnet, dass** die Seitenwände (10a, 10b) der Nut (10 - 12) die gegenüberliegenden Seiten (13a, 13b) des Schneidelements (13 - 15) zu wenigstens 50%, insbesondere wenigstens 80% überdecken.

14. Gesteinsbohrer nach einem der vorhergehenden Ansprüche, **dadurch gekennzeichnet, dass** der Hartstoffeinsatz (23) einen Radius (R₂₃) aufweist, welcher etwa 30% des Nennradius (R_{N}) des Gesteinsbohrers (1) beträgt.

15. Gesteinsbohrer nach einem der vorhergehenden Ansprüche, **dadurch gekennzeichnet, dass** die Schlagfläche (24) eine Dicke (d₂₄) aufweist, welche etwa 15% des Nennradius (R_{N}) des Gesteinsbohrers (1) beträgt.

16. Gesteinsbohrer nach einem der vorhergehenden Ansprüche, **dadurch gekennzeichnet, dass** das exzentrische Schneidelement eine Tiefe (T_{S13}) aufweist, welche etwa 55% des Nennradius (R_{N}) des Gesteinsbohrers (1) beträgt.

17. Gesteinsbohrer nach einem der vorhergehenden Ansprüche, **dadurch gekennzeichnet, dass** eine Schneide (17 - 19) des Schneidelements (13 - 15) gegenüber einer Oberfläche der Schlagfläche (24) in der Bohrrichtung (x) zurückversetzt ist.

18. Gesteinsbohrer nach einem der vorhergehenden Ansprüche, **dadurch gekennzeichnet, dass** die Oberfläche der Schlagfläche (24) als Teil einer Kegelmantelfläche ausgebildet ist.

19. Verfahren zur Herstellung eines Gesteinsbohrers nach einem der vorhergehenden Ansprüche, **dadurch gekennzeichnet, dass** der Bohrerkopf (2) in Draufsicht V-förmig oder dreieckförmig ausgebildet wird und an abgeflachten oder abgerundeten Seitenflächen (20 - 22) des Bohrerkopfes (2) etwa parallel zu der Längsrichtung (A) des Gesteinsbohrers (1) die Nuten (10 - 12) mittels einer in Längsrichtung (A) des Gesteinsbohrers (1) verfahrbaren Schleifscheibe (S) eingebracht werden, wobei eine Tiefe der Nut (10) durch eine radiale Zustellbewegung (B_{R10}) der Schleifscheibe (S) und eine Länge (L_{N10}) der Nut (10 - 12) durch eine axiale Verfahrbewegung (B_{A10}) der Schleifscheibe (S) erzeugt wird.

20. Verfahren zur Herstellung eines Gesteinsbohrers nach Anspruch 19, **dadurch gekennzeichnet, dass** bei der Herstellung der Nuten (10 - 12) wenigstens eine Nut (10, 11) in ihrer axialen Erstreckung in eine der Förderwendelnuten (4, 5) mündet.

## Claims

1. Masonry drill (1) comprising a drill head (2) having a carbide insert (23) arranged in the drill longitudinal axis (A) and at least three plate-shaped cutting elements (13-15) which are arranged eccentrically to the longitudinal axis (A) and are embedded radially in the drill head (2), **characterized in that** the drill head (2) is of V-shaped or triangular design in plan view, and the respective cutting element (13-15), with two opposite sides (13a, 13b), is embedded approximately parallel to the drill longitudinal axis (A) in an axially running groove (10-12) incorporated radially in the drill head (2), wherein the groove (12) runs out in a curved manner in the direction of the drill longitudinal axis (A) beyond the length (L_{S15}) of the cutting element (15) or at least one groove (10, 11) opens in the direction of the drill longitudinal axis (A or x') into a discharge flute (4, 5) of a conveying helix (3).

2. Masonry drill according to Claim 1, **characterized in that** the eccentric cutting elements (13-15) are arranged symmetrically over the circumference (9).

3. Masonry drill according to either of the preceding claims, **characterized in that** the eccentric cutting elements (13-15) are arranged symmetrically with respect to the drill longitudinal axis (A).

4. Masonry drill according to one of the preceding claims, **characterized in that** at least one side face (25a-25c) of the drill head (2) triangular in plan view is designed as an arched side face (25d; 25e-25g).

5. Masonry drill according to one of the preceding claims, **characterized in that** the carbide insert (23) is designed as a pin which is fastened in a bore (8) arranged centrally relative to the centre longitudinal axis (A) of the drill (1).

6. Masonry drill according to one of the preceding claims, **characterized in that,** between the central insert (23) and the plate-shaped cutting elements (13-15), an impact face (24) annular in plan view is formed on a front end (25) of the drill head (2).

7. Masonry drill according to one of the preceding claims, **characterized in that** the groove (10-12) has a uniform depth (T_{N10}).

8. Masonry drill according to one of the preceding claims, **characterized in that** the depth (T_{N10A}, T_{N10B}) of the groove (10-12) increases towards a drill point (29).

9. Masonry drill according to one of the preceding claims, **characterized in that** the groove (10-12) has a base (10c), at least a region of which runs in a curved manner in cross section.

10. Masonry drill according to one of the preceding claims, **characterized in that** the central carbide insert (23) is designed as a pyramid or cone in its effective region.

11. Masonry drill according to one of the preceding claims, **characterized in that** the plate-shaped eccentric cutting elements (13-15), with a transverse axis (Q_{S13}-Q_{S15}), are aligned with the centre longitudinal axis (A) of the drill (1).

12. Masonry drill according to one of the preceding claims, **characterized in that** at least one of the plate-shaped eccentric cutting elements (13-15) runs at a parallel distance from the centre longitudinal axis (A) of the drill (1) and so as to be tilted.

13. Masonry drill according to one of the preceding claims, **characterized in that** the side walls (10a, 10b) of the groove (10-12) overlap the opposite sides (13a, 13b) of the cutting element (13-15) by at least 50%, in particular by at least 80%.

14. Masonry drill according to one of the preceding claims, **characterized in that** the carbide insert (23) has a radius (R₂₃) which is about 30% of the nominal radius (R_{N}) of the masonry drill (1).

15. Masonry drill according to one of the preceding claims, **characterized in that** the impact face (24) has a thickness (d₂₄) which is about 15% of the nominal radius (R_{N}) of the masonry drill (1).

16. Masonry drill according to one of the preceding claims, **characterized in that** the eccentric cutting element has a depth (T_{S13}) which is about 55% of the nominal radius (R_{N}) of the masonry drill (1).

17. Masonry drill according to one of the preceding claims, **characterized in that** a cutting edge (17-19) of the cutting element (13-15) is set back in the drilling direction (x) relative to a surface of the impact face (24).

18. Masonry drill according to one of the preceding claims, **characterized in that** the surface of the impact face (24) is designed as part of a lateral surface of a cone.

19. Method of producing a masonry drill according to one of the preceding claims, **characterized in that** the drill head (2) is of V shaped or triangular design in plan view, and the grooves (10-12) are incorporated on flattened or rounded-off side faces (20-22) of the drill head (2) approximately parallel to the longitudinal direction (A) of the masonry drill (1) by means of a grinding wheel (S) traversable in the longitudinal direction (A) of the masonry drill (1), wherein a depth of the groove (10) is produced by a radial infeed movement (B_{R10}) of the grinding wheel (S) and a length (L_{N10}) of the groove (10-12) is produced by an axial traverse movement (B_{A10}) of the grinding wheel (S).

20. Method of producing a masonry drill according to Claim 19, **characterized in that,** during the production of the grooves (10-12), at least one groove (10, 11) opens in its axial extent into one of the conveying-helix flutes (4, 5).

## Revendications

1. Foret à matériaux (1) comportant une tête de foret (2), munie d'un insert en matière dure (23), installé suivant l'axe longitudinal (A) du foret et au moins trois éléments de coupe (13-15) en forme de plaquettes, installées en position excentrée par rapport à l'axe longitudinal (A), ces plaquettes étant intégrées radialement dans la tête de foret (2),
**caractérisé en ce que**
la tête de foret (2) présente en vue de dessus, une forme en V ou une forme triangulaire et chaque élément de coupe (13-15) a deux côtés opposés (13a, 13b) sensiblement parallèles à l'axe longitudinal (A) du foret, logés dans une rainure (10-12) axiale réalisée radialement dans la tête de foret (2),
la rainure (12) se termine au-delà de la longueur (L_{S15}) de l'élément de coupe (15) en direction de l'axe longitudinal (A) du foret suivant une forme courbe ou au moins une rainure (10, 11) débouche dans la direction de l'axe longitudinal (A ou x') du foret dans une rainure d'évacuation (4, 5) d'une spire de transfert (3).

2. Foret à matériaux selon la revendication 1,
**caractérisé en ce que**
les éléments de coupe (13-15) excentrés sont installés symétriquement selon la périphérie (9).

3. Foret à matériaux selon les revendications précédentes,
**caractérisé en ce que**
les éléments de coupe excentrés (13-15) sont installés de façon symétrique par rapport à l'axe longitudinal (A) du foret.

4. Foret à matériaux selon les revendications précédentes,
**caractérisé en ce qu'**
au moins une surface latérale (25a-25c) de la tête de foret (2) qui a une forme triangulaire en vue de dessus, est réalisée sous la forme d'une surface latérale bombée (25d ; 25e-25g).

5. Foret à matériaux selon les revendications précédentes,
**caractérisé en ce que**
l'insert en matière dure (23) est réalisé sous la forme d'une broche fixée dans un perçage (8) situé en position centrée par rapport à l'axe longitudinal médian (A) du foret (1).

6. Foret à matériaux selon les revendications précédentes,
**caractérisé par**
une surface de frappe (24) ayant en vue de dessus une forme d'anneau de cercle, est réalisée entre l'insert centré (23) et les éléments de coupe (13-15) en forme de plaquettes sur la face frontale (25) de la tête de foret (2).

7. Foret à matériaux selon les revendications précédentes,
**caractérisé en ce que**
la rainure (10-12) a une profondeur constante (T_{N10}).

8. Foret à matériaux selon les revendications précédentes,
**caractérisé en ce que**
la profondeur (T_{N10A}, T_{N10B}) de la rainure (10-12) augmente vers la pointe (29) du foret.

9. Foret à matériaux selon les revendications précédentes,
**caractérisé en ce que**
la rainure (10-12) a un fond (10c) ayant en section au moins en partie une forme d'arc.

10. Foret à matériaux selon les revendications précédentes,
**caractérisé en ce que**
l'insert central (23) en matière dure a une zone active en forme de pyramide ou de cône.

11. Foret à matériaux selon les revendications précédentes,
**caractérisé en ce que**
les éléments de coupe (13-15) en forme de plaquettes, en position excentrée, sont alignés selon un axe transversal (Q_{S13}-Q_{S15}) par rapport à l'axe longitudinal médian (A) du foret (1).

12. Foret à matériaux selon les revendications précédentes,
**caractérisé en ce qu'**
au moins l'un des éléments de coupe (13-15) en forme de plaquettes, en position excentrée, est écarté parallèlement à l'axe longitudinal médian (A) du foret (1) en étant basculé.

13. Foret à matériaux selon les revendications précédentes,
**caractérisé en ce que**
les parois latérales (10a, 10b) de la rainure (10-12) couvrent les faces opposées (13a, 13b) de l'élément de coupe (13-15) sur au moins 50 % et notamment au moins 80 %.

14. Foret à matériaux selon les revendications précédentes,
**caractérisé en ce que**
l'insert en matière dure (23) a un rayon (R₂₃) correspondant à environ 30 % du rayon nominal (R_{N}) du foret à matériaux (1).

15. Foret à matériaux selon les revendications précédentes,
**caractérisé en ce que**
la surface de frappe (24) a une épaisseur (d₂₄) correspondant à au moins 15 % du rayon nominal (R_{N}) du foret à matériaux (1).

16. Foret à matériaux selon les revendications précédentes,
**caractérisé en ce que**
l'élément de coupe excentré a une profondeur (T_{S13}) représentant environ 55 % du rayon nominal (R_{N}) du foret à matériaux (1).

17. Foret à matériaux selon les revendications précédentes,
**caractérisé en ce qu'**
une arête (17-19) de l'élément de coupe (13-15) est en retrait dans la direction de perçage (x) par rapport à la surface supérieure de la surface de frappe (24).

18. Foret à matériaux selon les revendications précédentes,
**caractérisé en ce que**
la surface supérieure de la surface de frappe (24) est constituée par une partie d'une surface enveloppe conique.

19. Procédé de fabrication d'un foret à matériaux selon les revendications précédentes,
**caractérisé en ce que**
la profondeur de la rainure (10) étant réalisée par un mouvement de rapprochement radial (B_{R10}) du disque de meuleuse (S) et la longueur (L_{N10}) de la rainure (10-12) est réalisée par un déplacement axial (B_{A10}) du disque de meuleuse (S).

20. Procédé de fabrication d'un foret à matériaux selon la revendication 19,
**caractérisé en ce que**
lors de la réalisation des rainures (10-12), au moins une rainure (10, 11) débouche dans l'une des rainures de spire de transfert (4, 5) par son prolongement axial.
